# DEMANDE DE BREVET EUROPEEN

(11) **EP 4 552 445 A1**
(43) Date de publication de la demande: **14.05.2025**
(21) Numéro de dépôt: 24211514.5
(22) Date de dépôt: 07.11.2024
(51) Int. Cl.: A01B 13/14, A01B 79/00, A01B 13/02, A01B 15/18

(54) **PROCEDE DE TRAVAIL DU SOL ET DISPOSITIF POUR LE METTRE EN OEUVRE**

(30) Priorité: 08.11.2023 FR 2312128
(71) Demandeur: Groupe Fourmet, 55120 Recicourt (FR)
(72) Inventeur: FOURMET, Aurélien, 55120 RECICOURT (FR)
(74) Mandataire: Cabinet Boettcher

(57) **Abrégé**

L'invention concerne un procédé et un dispositif de préparation d'un sol agricole, préalablement au semis, caractérisé en ce qu'il consiste à former, à une première profondeur (a), une pluralité de sillons au moyen de corps (2) de labour à double soc (2a) et double versoir (2b) symétriques, chacun espacé de son voisin d'une distance (E) dont la valeur est telle qu'elle laisse entre deux sillons (6) adjacents une bande de terre non travaillée de largeur (L) au moins égale à la largeur (C) de chaque sillon (6) puis à former, après une période de huit à quinze jours, à une deuxième profondeur (b) , une seconde pluralité de sillons (10), décalée par rapport à la première d'une valeur égale (D) au demi-écartement (E) des corps (2) de labour.

## Description

### ARRIERE PLAN DE L'INVENTION

La période actuelle est le théâtre de grands changements climatiques et environnementaux qui impliquent, en agriculture, une remise en cause des procédés traditionnels de travail du sol.

Cette remise en cause a commencé au début du siècle et s'appuie sur des innovations issues de ruptures technologiques liées aux progrès de la génomique et du numérique et à des pratiques culturales différentes des labours classiques.

Parmi ces évolutions majeures on mentionnera d'une part, l'élaboration de variétés végétales avec des propriétés recherchées comme la résistance aux agents ravageurs ou aux maladies, associées à la création de molécules cyto-pharmaceutiques plus efficaces sous des doses réduites et d'autre part, le développement de la numérisation, permettant un pilotage de précision du matériel agricole et une surveillance très fine des sols travaillés.

Pour ce qui concerne les techniques culturales, il faut mentionner celles dites simplifiées que sont par exemple le semis direct ou les cultures sans labour dans le but de respecter le plus possible la richesse naturelle des sols et leur aptitude à retenir l'humidité.

C'est dans ce cadre de l'évolution des pratiques culturales que s'inscrit l'invention. Plus précisément, l'état de la technique le plus proche de l'invention est à ce jour le procédé appelé « strip till » ou culture en bande, consistant à ouvrir un passage à travers les résidus en créant un lit de semences comparable à un travail conventionnel, mais tout en laissant les résidus en surface dans l'inter-rang pour conserver les avantages du semis direct (non perturbation du sol, conservation de l'humidité, réduction des levées adventices).

L'invention concerne une nouvelle technique de travail du sol qui conserve les qualités des techniques culturales simplifiées tout en proposant un travail de l'inter-bande.

### OBJET DE L'INVENTION

A cet effet l'invention a pour objet un procédé de préparation d'un sol agricole, préalablement au semis, caractérisé en ce qu'il consiste à former, à une première profondeur, une pluralité de sillons au moyen de corps de labour à double soc et double versoir symétrique, chacun espacé de son voisin d'une distance dont la valeur est telle qu'elle laisse entre deux sillons adjacents une bande de terre non travaillée de largeur au moins égale à la largeur de chaque sillon puis à former, après une période de huit à quinze jours, à une deuxième profondeur, une seconde pluralité de sillons, décalée par rapport à la première d'une valeur égale au demi-écartement des corps de labour.

Le premier passage des corps de labour ouvre des sillons en déversant la terre retournée sur la bande de sol laissée non travaillée entre les sillons. La bande de sol est plus exactement recouverte, sensiblement sur la moitié de sa largeur, par la terre issue d'un versoir, la seconde moitié de largeur de cette bande étant quant à elle, recouverte par la terre retournée par le versoir du corps de labour adjacent. Ces deux portions de terre rabattues sur la bande non travaillée butées et adossées l'une à l'autre forment alors une sorte d'andain entre chaque sillon au coeur duquel les résidus de culture sont contenus à l'abri de l'atmosphère. Il se produit alors, avant le second passage des corps de labour, une première décomposition naturelle de ces résidus (ceux retournés et ceux non travaillés) qui constitue une réserve de matière azotée en même temps qu'une conservation des organismes prospérant à la surface du sol.

Le second passage des corps de labour est réalisé après le temps utile à cette décomposition, temps qui est de l'ordre d'une à deux ou trois semaines, dépendant essentiellement de la nature du sol, des conditions climatiques et atmosphériques régnant à l'endroit du travail et surtout de l'expérience de l'agriculteur qui est le mieux à même de connaître le comportement des champs qu'il travaille, comme cela est toujours le cas en matière d'agriculture. Lors de ce second passage, chaque corps vient fendre un andain en même temps qu'il constitue un sillon, également peu profond, de même profondeur que le premier sillon ou d'une profondeur légèrement plus importante, à l'endroit de la bande de terre non travaillée. On constitue à nouveau une pluralité d'andains adjacents de volume plus importants que les premiers qui viennent largement combler les sillons réalisés lors du premier passage des corps.

On comprend que par ce traitement du sol, la matière organique qu'il contient est conservée dans chaque andain, ce qui apporte les avantages que l'on connaît en termes de conservation de la richesse du sol, de sa biodiversité et donc de moindre besoin d'engrais de synthèse.

Après ces deux passages, on procède bien entendu au nivelage du sol par des outils classiques. Le sol est alors prêt pour un semis que l'on pourra réaliser en temps utile, en fonction de la nature de la plante à récoler et des conditions climatiques favorables à cette opération.

De manière préférée, l'écartement latéral des corps de labour à double versoir est plus important que la stricte largeur de chaque corps de sorte qu'au second passage, il est conservé entre les premiers et les deuxièmes sillons une bande étroite de sol non travaillée qui présente l'avantage de constituer entre deux sillons adjacents une sorte de muret dont la présence peut être bénéfique à la rétention d'eau et s'opposer au lessivage qui peut se produire en fond de sillon, selon la configuration du terrain travaillé.

Dans une variante préférée du procédé selon l'invention, la profondeur des seconds sillons est plus importante que celle des premiers sillons. Le muret inter-sillons est alors mieux fondé.

En outre, afin de favoriser le travail de chaque corps, le procédé de l'invention comporte en avant de la réalisation des sillons, l'ouverture d'un mini sillon. La profondeur des mini sillons est de préférence au moins égale à la profondeur des sillons.

Un second objet de l'invention réside dans le dispositif destiné à mettre en oeuvre le procédé susdit.

Ce dispositif comprend un outil constitué par un châssis transversal par rapport au sens de travail sous lequel sont fixés à équidistance les uns des autres une pluralité de corps de labour à double soc et double versoir, la distance séparant deux corps adjacents étant au moins égale au double de la largeur de travail de chaque corps.

Le châssis susdit constitue également le support d'une dent précédant chaque corps pour ouvrir un mini sillon avant ce dernier. Chaque dent a de préférence une profondeur de travail au moins égale à celle dudit corps.

Les corps d'extrémité sont des demi-corps avec un seul soc et un seul versoir.

D'autres caractéristiques et avantages ressortiront de la description donnée ci-après d'exemples de réalisation de l'invention.

### BREVE DESCRIPTION DES DESSINS

Il sera fait référence aux dessins annexés parmi lesquels :
Fig 1] est un schéma illustrant la structure générale de l'outil pour mettre en oeuvre le procédé selon l'invention,
Fig 2] est une vue de profil d'un corps porté par le châssis
Fig 3] est le schéma en coupe du travail du sol réalisé par l'outil de la figure 1, lors d'une première passe de cet outil,
Fig 4] est un schéma partiel illustrant la position de l'outil de la figure 1 lors du second passage de ce dernier,
Fig 5] est un schéma identique à la figure 2 illustrant la configuration du sol après les deux passages de l'outil,
Fig 6] illustre par une coupe la structure du sol avant le semis.

### DESCRIPTION DETAILLEE DE L'INVENTION :

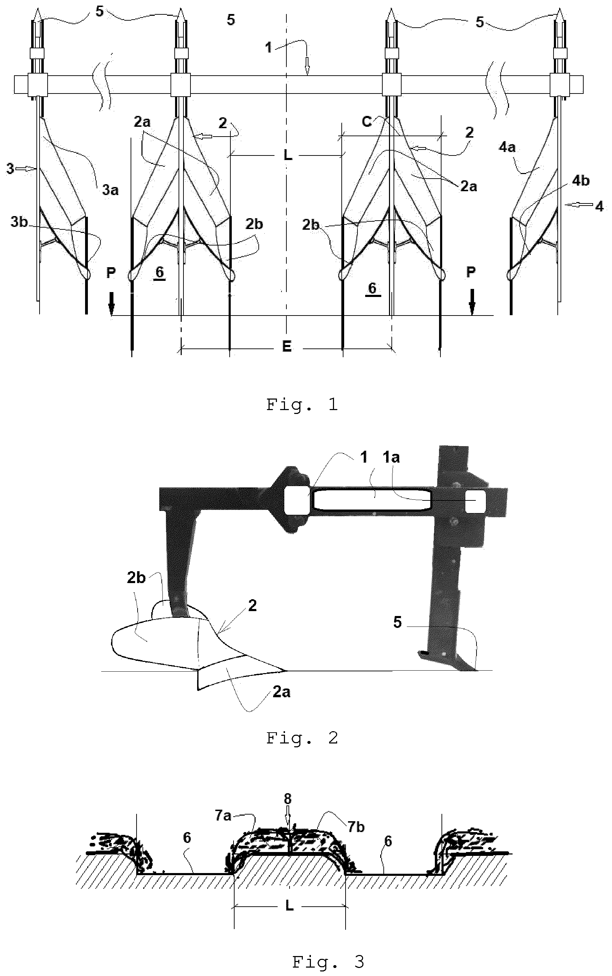

En référence avec les figures 1 et 2, l'outil pour mettre en oeuvre le procédé de l'invention est d'une architecture classique avec une poutre ou un châssis transversal 1, 1a, porteur d'une pluralité de corps de labour 2 à double soc 2a et double versoir 2b, à l'exception des corps 3 et 4 d'extrémité qui sont des demi corps avec simple soc 3a, 4a dont les versoirs simples 3b, 4b sont tournés vers le centre de l'outil.

Le châssis 1 porte également, à l'avant de chaque corps, dans le sens A du travail, une dent 5 qui permettent d'ouvrir le sol en y formant un mini sillon suivi par la pointe du soc correspondant (autrement dit, la pointe de la dent et la pointe du soc qu'elle précède sont sur une ligne sensiblement parallèle à la direction d'avancement). L'outil ne sera ni décrit ni représenté plus en détail, car il comporte tous les éléments connus dans les charrues multi corps portées, en particulier les organes de sécurité anti-pierres et les moyens de réglage de la profondeur du travail. Le châssis est de préférence articulé de manière à pouvoir relever chacune de ses extrémités pour le transport.

Le schéma vu de dessus de la figure 1 illustre l'écartement E de deux corps adjacents qui est au moins égal à deux fois la largeur C de chaque corps donc à la largeur du sillon formé par ce corps.

Le procédé de l'invention comporte une première phase de travail du sol qui consiste à former des sillons ou une raie de largeur la (largeur séparant l'extrémité de chaque soc d'un corps) d'une profondeur (a) donnée relativement faible (de l'ordre de la dizaine de centimètres) et espacées d'une bande de sol non travaillée de largeur au moins égale à la largeur de la raie et de préférence d'une largeur L supérieure de l'ordre de 10 cm à celle C de chaque corps. La bande de terre retournée 7a par un versoir 3a se déverse sur la bande de terre non travaillée en même temps que celle 2b retournée par le versoir 2b du corps adjacent. Ces deux bandes s'adossent l'une à l'autre et forment un andain 8 enfermant les végétaux résiduels en son sein.

La figure 3 illustre schématiquement en coupe par le plan PP de la figure 1, le résultat obtenu par ce premier passage de l'outil. On a représenté les sillons 6 et les andains 8 formés comme décrit ci-dessus.

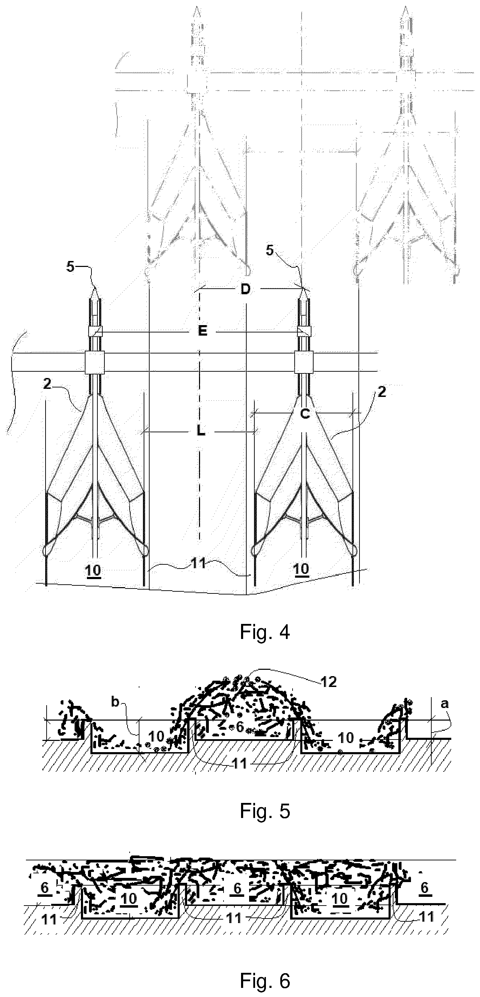

La figure 4 illustre la deuxième phase de travail selon l'invention. On a représenté de manière estompée, la position que l'outil avait lors de l'exécution de la première phase exposée ci-dessus. L'outil, pour la deuxième phase, est décalé transversalement par rapport à cette position d'une valeur D, égale à la moitié de l'écartement E de deux corps adjacents. La profondeur de travail (b) peut être identique à celle de la première phase mais sera de préférence un peu plus importante que celle-ci (de l'ordre d'une fois et demi celle-ci). Lors de cette seconde phase, le passage de l'outil vient fendre les andains 8 pour les renverser dans les sillons 6 par moitié en même temps que les bandes de sol non travaillées lors du premier passage de l'outil. On remarquera que, du fait d'une largeur de bande non travaillée L plus grande que la largeur C de chaque corps, les sillons 10 formés dans cette seconde phase de travail laissent subsister une portion de sol non travaillée entre eux et les sillons de la première phase, portions qui constituent une sorte de murets 11 qui, selon la configuration du sol, peuvent avantageusement s'opposer au lessivage du sol, notamment lors de pluies torrentielles et plus généralement à une rétention d'humidité dans les andains. Ces murets 9 sont visibles sur la figure 5 qui est une coupe du sol semblable à la figure 3 illustrant en outre, la formation des andains définitifs 12 qui viennent largement combler les premiers sillons.

La figure 6 illustre aussi par une coupe l'état final du sol préparé selon le procédé de l'invention après passage s'un outil égaliseur de surface, prêt pour le semis.

On notera que la dent se trouvant en avant de chaque soc est particulièrement utile pour la réalisation du travail de sol envisagé.

En effet, pendant le labour, l'effort exercé par la terre sur la pointe avant du soc tend à faire remonter le soc. Ceci n'est pas gênant quand on laboure à la profondeur habituelle car le poids de la couche de terre se trouvant au-dessus du soc tend à maintenir le soc à sa profondeur de travail. En revanche, dans le procédé de l'invention, la profondeur de travail du sol est plus faible, de l'ordre d'une dizaine de centimètres de profondeur seulement. Or, à une telle profondeur, le poids de la couche de terre se trouvant au-dessus du soc est insuffisant pour empêcher le soc de remonter. La dent 5, dont l'extrémité se trouve à une profondeur au moins égale, mais de préférence supérieure, à la profondeur de la pointe avant du soc permet d'ouvrir le sillon et de limiter les efforts exercés par la terre sur la pointe avant du soc qui tend ainsi à rester à la profondeur prévue.

Bien entendu, l'invention n'est pas limitée au mode de réalisation décrit mais englobe toute variante entrant dans le champ de l'invention telle que définie par les revendications.

## Revendications

1. Procédé de préparation d'un sol agricole, préalablement au semis, **caractérisé en ce qu'**il consiste à former, à une première profondeur (a), une pluralité de sillons au moyen de corps (2) de labour à double soc (2a) et double versoir (2b) symétriques, chacun espacé de son voisin d'une distance (E) dont la valeur est telle qu'elle laisse entre deux sillons (6) adjacents une bande de terre non travaillée de largeur (L) au moins égale à la largeur (C) de chaque sillon (6) puis à former, après une période de huit à quinze jours, à une deuxième profondeur (b) , une seconde pluralité de sillons (10), décalée par rapport à la première d'une valeur égale (D) au demi-écartement (E) des corps (2) de labour.

2. Procédé selon la revendication 1, dans lequel l'écartement (E) latéral des corps (2) de labour à double versoir est plus important que le double de la stricte largeur (C) de chaque corps, de sorte qu'au second passage, il est conservé entre les premiers et les deuxièmes sillons une bande étroite de sol non travaillée qui constitue entre deux sillons (6,10) adjacents une sorte de muret (11).

3. Procédé selon la revendication 1 ou la revendication 2, dans lequel la profondeur (b) des seconds sillons (10) est plus importante que celle (a) des premiers sillons (6).

4. Procédé selon l'une des revendications précédentes comportant, en avant de la réalisation des sillons, l'ouverture d'un mini sillon.

5. Procédé selon la revendication 4, dans lequel la profondeur des mini sillons est au moins égale à la profondeur des sillons (6, 10) .

6. Dispositif de préparation de sol agricole, **caractérisé en ce qu'**il comprend un outil constitué par un châssis transversal (1, 1a) par rapport au sens de travail (A) sous lequel sont fixés à équidistance les uns des autres une pluralité de corps (2) de labour à double soc (2a) et double versoir (3a), l'écartement (E) de deux corps (2) adjacents étant au moins égal au double de la largeur (C) de travail de chaque corps (2).

7. Dispositif selon la revendication 6, **caractérisé en ce que** le châssis (1) susdit constitue également le support d'une dent (5) précédant chaque corps (2) pour ouvrir un mini sillon avant ce dernier.

8. Dispositif selon la revendication 7, dans lequel la dent (5) a une profondeur de travail au moins égale à celle dudit corps (2).

9. Dispositif selon l'une quelconque des revendications 6 à 8, **caractérisé en ce qu'**il comporte à chaque extrémité un demi-corps (3, 4) dont le versoir (3a, 4a) est tourné vers le centre de l'outil.
